# EUROPEAN PATENT APPLICATION

(11) **EP 1 400 185 A1**
(43) Date of publication of application: **24.03.2004**
(21) Application number: 02447179.9
(22) Date of filing: 23.09.2002
(51) Int. Cl.: A45B 23/00, F16M 11/04, E04F 10/00

(54) **Rotatable parasol arm**

(71) Applicant: Symo, 8200 Brugge (BE)
(72) Inventor: Christiaens, Pierre, 8490 Varsenare (BE)
(74) Representative: Luys, Marie-José

(57) **Abstract**

The present invention relates to a rotatable parasol arm comprising a fixing part (2) for fixing the parasol arm (1) on a substantially vertical support and an arm part (4) having a head (5) for holding a parasol, whereby the fixing part (2) extends substantially parallel to or in line with the vertical support. The arm part (4) is connected to the fixing part (2) by means of a shoulder (3) which enables rotation of the arm part (4) with respect to the fixing part (2) about a first axis between a storage position in which the arm part (4) extends in its length direction substantially parallel to the fixing part (2) and a supporting position in which the arm part (4) extends in a direction away from the fixing part (2). The parasol arm (1) further comprises first locking means (6) for locking the arm part (4) in the supporting position.

## Description

The present invention relates to a rotatable parasol arm as described in the preamble of the first claim.

Such a rotatable parasol arm is for example known from EP-A-0.838.176. The rotatable parasol arm for carrying a parasol disclosed in EP-A-0.838.176 comprises a fixing part for fixing the parasol arm to a substantially vertical support, and an arm part having a head for holding a parasol. The arm part comprises at least two parts which are connected to each other by means of a torsion-resistant hinge. The arm part may be connected to the fixing part by an additional hinge. Each hinge has two parallel vertical rotation axes, and each part of the arm part is rotatable around one of both rotation axes. Due to this construction, the two parts of the arm part are each time rotatable with respect to each other over substantially 360° in an horizontal plane, allowing the positioning of the parasol at a number of different positions in the same horizontal plane. Also, the arm part as a whole is rotatable with respect to the fixing part in this same horizontal plane.

The parasol arm of EP-A-0.838.176 has the disadvantage that when the parasol arm is not in use, the parasol arm is folded up by rotating the parts of the arm part around their corresponding vertical rotation axes in the horizontal plane such that they lie parallel against one another. Subsequently, the folded arm part is rotated with respect to the fixing part in this same horizontal plane to bring the folded arm part to a position parallel to the wall to which the fixing part is mounted. However, in the case the parasol arm of EP-A-0.838.176 is mounted on a stake, the folded arm part protrudes away from the stake in the storage position as only a rotation of the folded arm part with respect to the fixing part in the horizontal plane is possible. As such, persons standing in the vicinity of the stake may be hindered or even hurt themselves on these protruding arm parts.

NL-1009720 discloses a parasol comprising a collapsible parasol, which is connected by means of a suitable coupling to the end of a parasol arm, which is in its turn connected to a fixing part for fixing the parasol to a vertical support or the like. The arm part comprises a first part and a telescopic part which may be slid inside or outside the first part. The disadvantage of the parasol disclosed in NL-1009720 is that the arm part is fixed to the fixing part. As a consequence, the arm part can not be moved with respect of the fixin part to bring the parasol in a storage position.

It is the object of the present invention to provide a rotatable parasol arm which can be stored in a better way.

This aim is achieved with the parasol arm showing the technical features of the characterising part of the first claim.

The arm part of the parasol arm of the present invention is connected to the fixing part by means of a shoulder which enables rotation of the arm part with respect to the fixing part about a first axis between a storage position in which the arm part extends in its length direction substantially parallel to the fixing part and a supporting position in which the arm part extends in a direction away from the fixing part. The parasol arm further comprises first locking means for locking the arm part in the supporting position.

When the fixing part of the rotatable parasol arm of the present invention is for instance fixed to the upper end of a substantially vertical stake such that the fixing part is in line with this stake, the arm part extends in the storage position substantially parallel to this fixing part, so parallel to the stake. Thus, in the storage position, the arm part does not protrude away from the stake and does not hinder persons standing in the immediate surroundings. This is an advantage as compared to the known parasol arm where the arm part protrudes away from the stake in the storage position. When the fixing part of the parasol arm of the present invention is fixed to a substantially vertical wall such that the fixing part is parallel to the wall, the arm part extends in the storage position substantially vertical and parallel to this wall and to the fixing part. As such, the arm part is adjacent the fixing part along at least a part of its length. This is an advantage from an aesthetical point of view as compared to the known parasol arm where the arm part protrudes from the fixing part in the storage position. The parallel positioning allows to improve the storability of the parasol arm of the present invention as compared to prior art parasol arms, irrespective of the fact that the parasol arm is connected to an independent stake or a wall. The locking of the arm part in the supporting position by the first locking means allows for a stable holding of the parasol in the supporting position, even at windy days.

Preferably, the shoulder further enables rotation of the arm part with respect to the fixing part about a second axis which extends substantially parallel to the fixing part, the parasol arm further comprising second locking means for locking the rotation about the second axis. The rotation of the arm part about this second axis results in a round scope for positioning the parasol. In this way, the position of the parasol can be adapted to the position of the sun. The locking of the arm part about the second axis enables a stable holding of the parasol in any position of this round scope.

Furthermore, the use of hinges of the type known from EP-A-0.838.176 can be avoided with the parasol arm of the invention, without limiting its scope of possible positions for the parasol. This is an advantage, since such hinges form weak constructive parts.

In a preferred embodiment, the arm part is connected to the shoulder on a distance above the first axis and the fixing part has a substantially rounded shape on a side which is located adjacent the arm part in the storage position. The connection of the arm part to the shoulder on a distance above the first axis enables the rotation of the arm part with respect to the fixing part about the first axis. Because of this rounded shape, the arm part can be brought from the supporting position to the storage position parallel to the fixing part at any rotated position of the arm part about the second axis without causing to force the parasol arm. There is thus no need to first rotate the arm part about the second axis to its central position before the arm part can be rotated about its first axis to the storage position.

The first locking means preferably comprise a support part having a first end rotatably connected to the fixing part, and a second end rotatably connected to a carriage. The carriage is slidably connected to the arm part and is provided with a releasable lock for locking the arm part in the supporting position. This embodiment of the first locking means has the advantage that the support part, which connects the arm part to the fixing part, transfers forces acting on the arm part to the fixing part and further to the vertical support on which the parasol arm of the invention is mounted. This may enhance the strength of the parasol arm of the invention.

Preferably, the first locking means are furthermore provided for locking the arm part in an intermediate position between storage and supporting position as well as in the storage position. In such an intermediate position of the arm part, the mounting of a parasol to the head of the arm part is facilitated since the head is in this case situated at a smaller vertical distance above the ground. The possibility of locking of the arm part in the storage position prevents little children form playing with the parasol arm, thereby possibly hurting themselves or other people or causing damage to the parasol arm.

Preferably, the parasol arm comprises third locking means for further locking the am part in the storage position, the supporting position as well as in an intermediate position between storage and supporting position. In this way, the first and third locking means together provide a double lock for locking the parasol arm in the storage position. This has advantages in the case the parasol arm is mounted on public places, where the parasol arm may be left in the storage position, the supporting position, or possibly in an intermediate position between storage and supporting position, for longer time periods. The double lock may prevent unintentional moving of the parasol arm and as such can reduce the risk of vandalism.

Preferably, the arm part comprises a first longitudinally extending profile enclosing a longitudinally extending space at a side of the arm part which is adjacent the fixing part in the storage position, the support part being received at least partly in the space when the arm part is in the storage position. This is an advantage from an aesthetical point of view since as the support part is no longer visible in the supporting position and thus allows the parasol arm to be stored in a more elegant way.

In another preferred embodiment of the parasol arm of this invention, the parasol arm comprises a pull spring and/or a gas spring for aiding movement from the storage position towards the supporting position. Because of the presence of the pull spring and/or gas spring, only small forces are needed for moving the arm part from the storage position towards the supporting position. As such, the user-friendliness of the parasol arm is enhanced.

In a further preferred embodiment of the parasol arm of the present invention, the arm part is telescopic. As the length of the arm part can be varied, the flexibility for positioning the parasol is further enhanced.

The invention and preferred embodiments of the invention are further elucidated in the following figures and description of the figures.

Figure 1 is a side view to a preferred embodiment of the parasol arm of the present invention in the storage position.

Figure 2 is a front view to the parasol arm of Figure 1 in the supporting position.

Figure 3 is a side view to the parasol arm of Figure 1 in the supporting position.

Figure 4 is a side view to the parasol arm of Figure 1 in an intermediate position between the storage and the supporting position.

Figure 5 is a top view to the parasol arm of Figure 1.

Figure 6 is a perspective view of a preferred embodiment of the parasol arm of the present invention.

Figure 7 is another perspective view of the parasol arm of Figure 6 viewed along another side.

Figure 8 is an exploded view of the fixing part of the parasol arm of Figure 6.

Figure 9 is a view to the second locking means of the parasol arm of Figure 6.

Figure 10 is an exploded view of the fixing part, the shoulder and the arm part of the parasol arm of Figure 6.

Figure 11 is a view to the first locking means of the parasol arm of Figure 6.

Figure 12 is a detail of the carriage and the releasable lock of the first locking means.

Figure 13 is an exploded view of the head of the parasol arm of Figure 6.

Figure 14a is a cross section of the outer profile of the arm part of the parasol arm of Figure 6.

Figure 14b is a bottom view to the outer profile of the arm part of the parasol arm of Figure 6.

Figure 15a is a cross section of the inner profile of the arm part.

Figure 15b is a bottom view to the inner profile of the arm part of the parasol arm of Figure 6.

Figure 16 is a view to the telescopic mechanism of the arm part 4 of the parasol arm of the present invention.

Figure 17 shows a front view to a cross section of the arm part 4 taken at line F in Figure 16.

As can be seen from Figures 3-4, the parasol arm of this invention 1 comprises a fixing part 2 for fixing the parasol arm 1 to a substantially vertical support or the like, and an arm part 4 comprising a head 5 for holding the parasol. The arm part 4 is connected to the fixing part 2 by means of a shoulder 3.

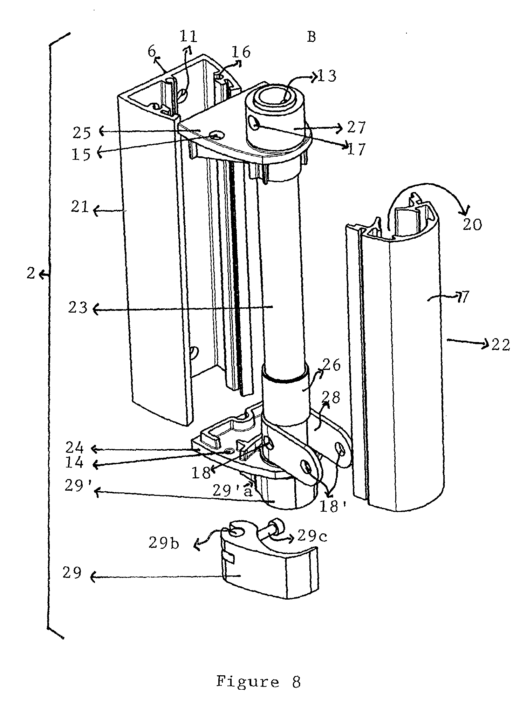

The fixing part 2 shown in Figure 8 comprises a first longitudinally extending profile 21 and a co-operating second longitudinally extending profile 22. In the first profile 21, holes 11 are present for receiving screws or bolts or any other fixing means for fixing the parasol arm 1 to a substantially vertical support or the like. The parasol arm 1 may however also be fixed to a substantially vertical support in any other suitable way. When the fixing part 2 is fixed to a substantially vertical support, for instance a wall, the outer face 6 of the first profile 21 faces this wall. The face 7 of the second profile 22 which faces the arm part 4 is substantially rounded.

In Figure 8, at the bottom and top end of the first profile 21, respectively co-operating plates 24 and 25 are connected to the profile 21. Thereto, screws or bolts are passed throughout the holes 14, 15 in the plates 24, 25, which are received in corresponding recesses 16 in the inner face of the profile 21. However, these plates 24, 25 may also be fixed to the profile 21 in any other suitable way. In the central space 20 enclosed within the second profile 22, a longitudinally extending tube 23 is rotatably received. The tube 23 is rotatable about its own vertical axis B. This tube 23 protrudes at the bottom and top of the fixing part 2 throughout corresponding holes provided in the plates 24 and 25. In the vicinity of the bottom end of the tube 23, just above the bottom plate 24 in height direction of the fixing part 2, a connecting means 28 is fixed to the tube 23 for rotatably connecting the support part 60 of the first locking means 6 to the fixing part 2 (see below). Thereto, a screw or bolt or any other fixing means is passed throughout the holes 18 in the connecting means and further throughout corresponding holes (not visible) in the tube 23. Above this fixing means 28, a hollow ring 26 is provided around the tube 23 which is rotatable around the tube 23. This ring 26 facilitates the rotating of the tube 23 within the central space 20 of the profile 22. At the top end of the tube 23, just above the top plate 25, a hollow ring 27 is provided around the tube 23 for rotatably connecting the shoulder 3 to the fixing part 2 (see below).

The space 20 enclosed within the profile 21 is one continuous space whereby the space for receiving the tube 23 is not separated from the remaining space. This is an advantage since the mould for extruding the profile 21 is cheaper as compared to a mould for extruding profiles whereby this space for receiving the tube 23 would be separated form the remaining space.

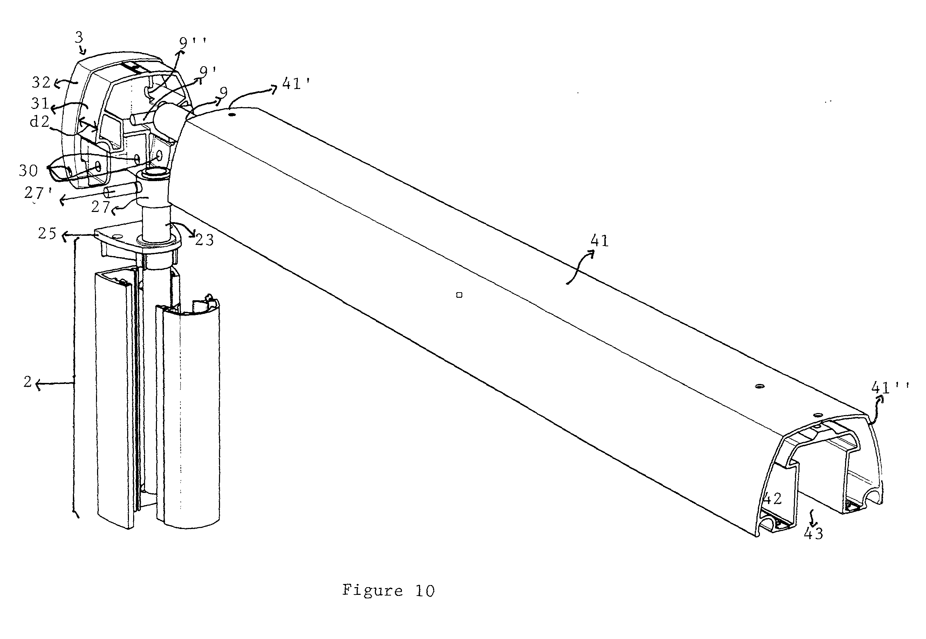

The shoulder 3 shown in Figure 10 comprises a first shoulder part 31 to which the arm part 4 is connected and a second shoulder part 32 to which the fixing part 2 is connected.

The shoulder 3 is hingedly connected to the fixing part 2. In Figure 10, the shoulder 3 is hingedly connected to top end of the tube 23 extending above the top plate 25. Thereto, a coupling axis 27' extends throughout the holes 30 in the second shoulder part 32, and further throughout the holes 17 in the hollow ring 27 and the corresponding holes 13 in the tube 23 (shown in Figure 8). However, a screw or bolt or any other fixing means may also be used instead of the coupling axis 27'. Alternatively, the shoulder 3 may be connected directly to the tube 23 without the additional presence of the hollow ring 27.

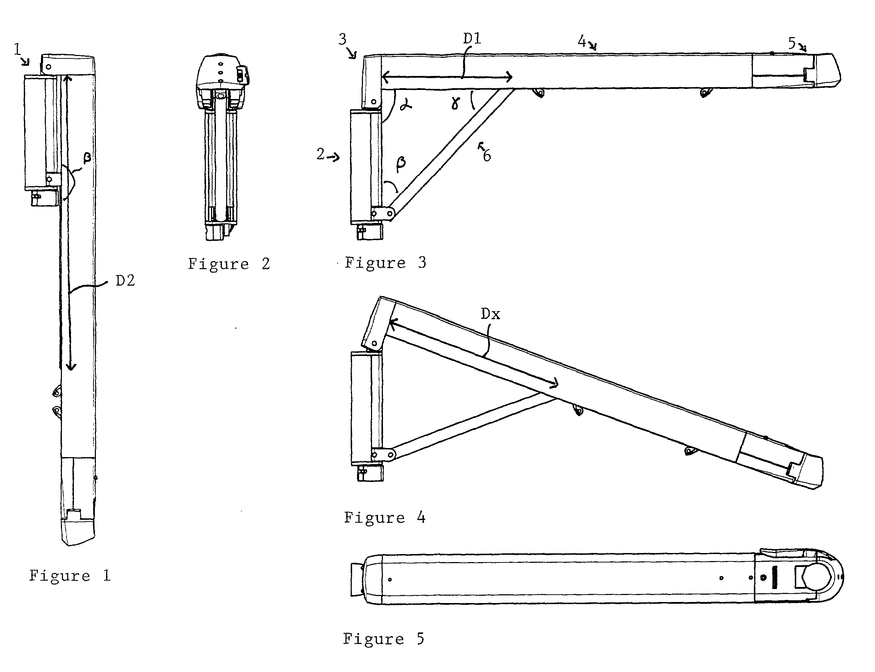

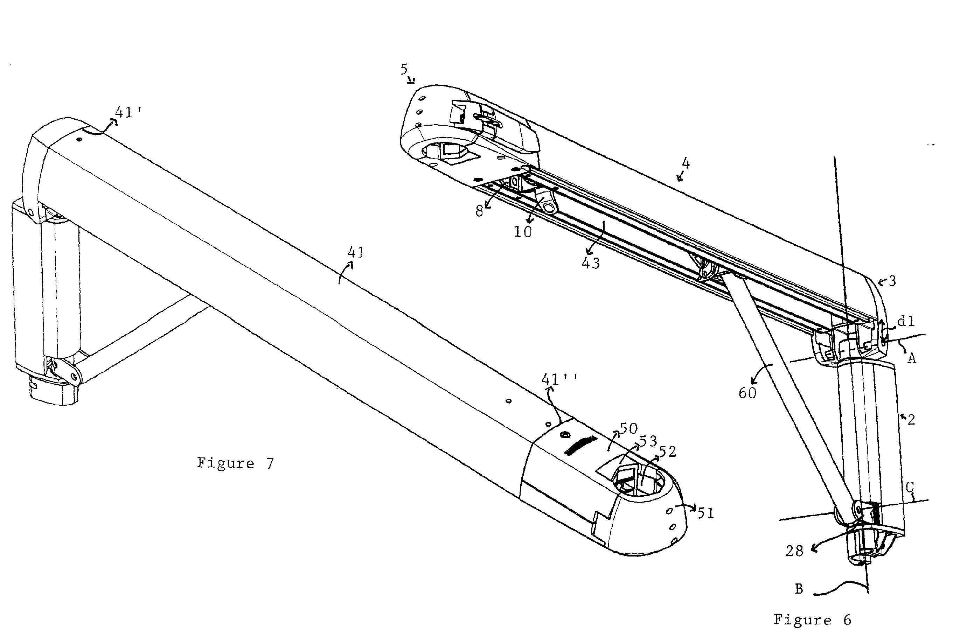

The shoulder 3 enables rotation of the arm part 4 with respect to the fixing part 2 about a first axis (shown by line A in Figure 6) between a storage position (Figure 1) in which the arm part 4 extends substantially parallel to the fixing part 2 and a supporting position (Figure 3) in which the arm part 4 extends in a direction away from the fixing part 2. In Figure 2, the arm part is in the supporting position at an angle α of 90° with respect to the fixing part 2. This angle may however also be smaller or larger than 90°. As can be seen from figure 6, the first axis A is substantially perpendicular to the vertical rotation axis B of the tube 23, both lines intersecting each other at the height of the shoulder 3. In Figure 6, axis A extends in transverse direction of the arm part 4.

From Figure 6 it can be seen that the arm part 4 is at a first end connected to the shoulder 3 at a distance d₁ above the first axis A. This feature enables the rotation of the arm part 4 with respect to the fixing part about the first axis A. At the second end of the arm part 4 opposite the first end, the arm part 4 comprises a head 5 for holding a parasol.

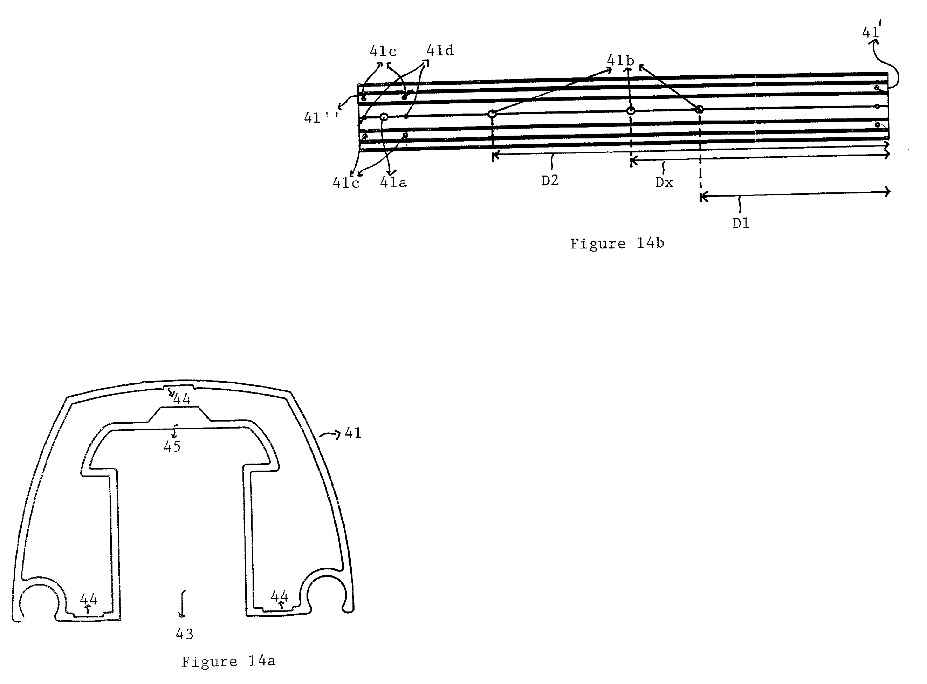

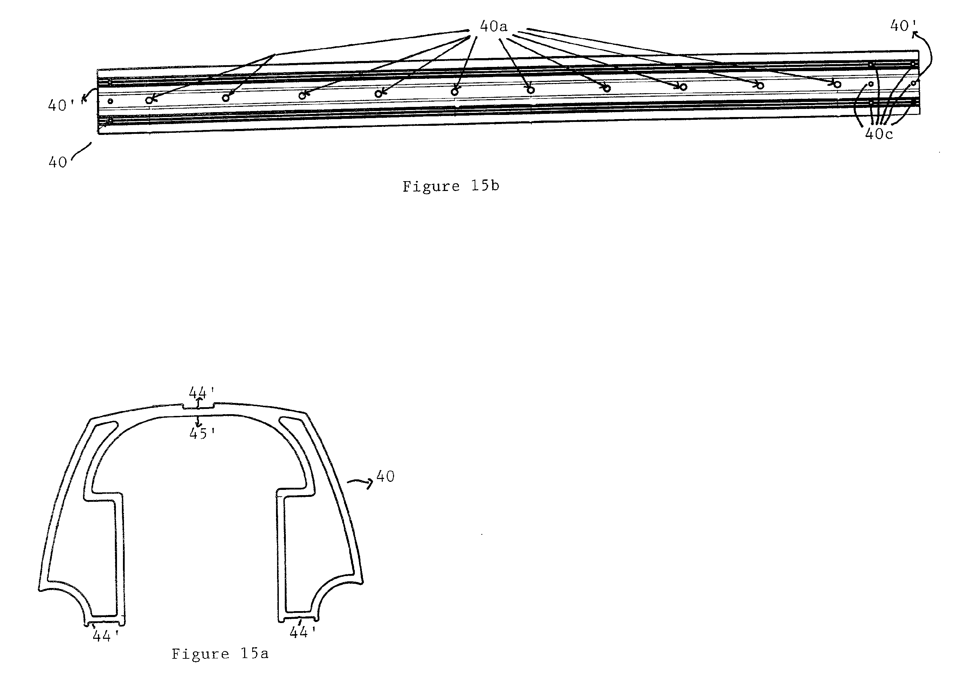

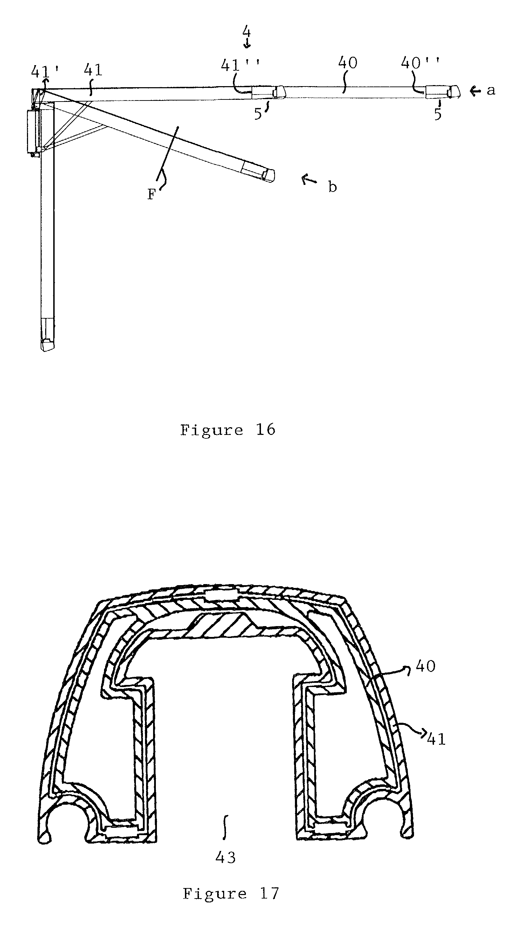

The arm part 4 may be telescopic, as shown in Figure 16. Thereto, the arm part 4 comprises two parts: a first longitudinally extending outer profile 41 (Figure 14) being connected at its first end 41' to the shoulder 3, and a telescopic second longitudinally extending inner profile 40 (Figure 15) to which at its end 40" the head 5 is connected, which can be slid in and out the outer profile 41. Thereto, the inner profile is slidably connected to the outer profile 41 and is received within the space 42 enclosed within the outer profile 40. The length of the inner profile 40 may be smaller or equal to that of the outer profile 41. In the non-extended position of the arm part 4, shown by situation b in Figure 16, the inner profile 40 is entirely surrounded by the outer profile 40 (Figure 17). When the inner profile 40 is slid out of the outer profile 41 in the direction away from the shoulder 3, shown by situation a in Figure 16, the length of the arm part 4 is increased. As such, the flexibility for positioning the parasol may be further increased. In this position, the end 40' opposite the end 40" of the inner profile 40 is in the vicinity of the second end 41" opposite the first end 41' of the outer profile 41.

It can be seen from figure 14 that the face 45 of the outer profile 41 facing the space 43 enclosed by the outer profile 41 comprises in the middle with respect to the transverse direction of the outer profile 41 a hole 41 a in the vicinity of the second end 41" of the outer profile 41 opposite the first end 41' and a series of holes 41 b in longitudinal direction of the outer profile. The hole 41 a is provided for receiving the protrusion of the releasable lock 10 (see below), whereas the holes 41 b are provided for receiving the protrusion of the releasable lock 62 of the first locking means (see below). The face 45' of the inner profile 41 facing the face 45 of the outer profile 41 comprises in the middle with respect to the transverse direction of the inner profile 41 a series of holes 40a for receiving the protrusion of the releasable lock 10 protruding throughout the hole 41 a in the outer profile 41 (see below).

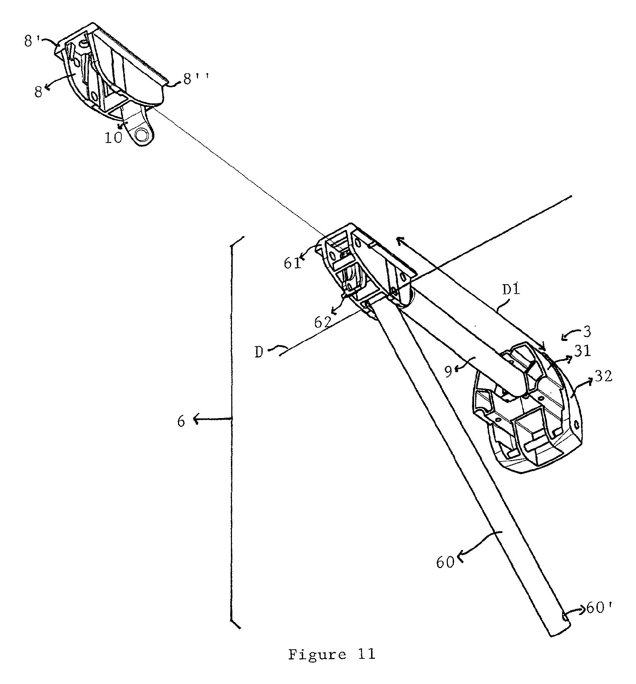

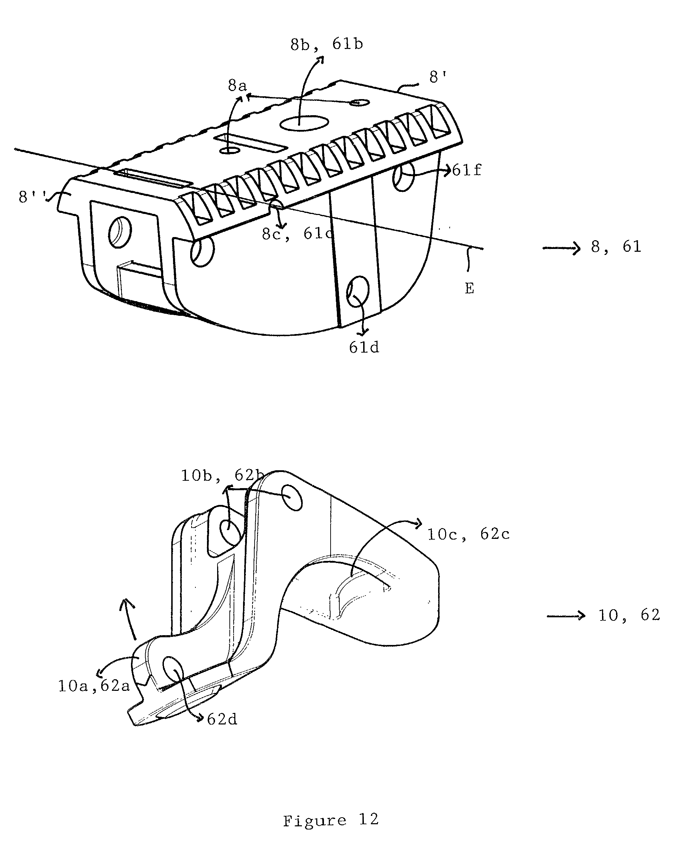

The telescopic mechanism of the outer profile 41 and the inner profile 40 may be achieved in the following way. At the second end 41" of the outer profile 41, a carriage 8 is present, as shown in Figures 6 and 11. The carriage 8, shown in detail in Figure 12, fits in the space 43 enclosed by the outer profile 41. The carriage 8 is fixed to the outer profile 41 by means of screws or bolts or any other connecting means passed throughout the holes 8a in the top face of the carriage 8 and received in the corresponding holes 41 d in the outer profile 41 (Figure 14b and Figure 10). The carriage 8 is oriented such that the end 8' of the carriage is situated near the end 41" of the outer profile 41. To the carriage, a releasable lock 10 (Figure 11 and 12) is hingedly connected by means of an axis (not shown) extending throughout the holes 10b in the releasable lock 10 and further throughout the holes 8c in the carriage 8. As such, the releasable lock 10 is rotatable with respect to the carriage 8 about the axis shown by line E. On the top of the face 10c of the releasable lock 10, a protrusion (not shown) is present which protrudes throughout the hole 8b in the top face of the carriage 8, further throughout the hole 41 a in the outer profile 41 (Figure 14b), and further throughout one of the holes 40a in the inner profile 40. As such, the inner profile 40 is fixed with respect to the outer profile 41 and is thus prevented from sliding within the space 42 enclosed within the outer profile 41. Depending on which hole 40 a of the inner profile 40 is situated above the hole 41 a in the outer profile 41, the length of the arm part 4 is longer or shorter. When the hole 40a closest near the end 40 " of the inner profile 40 is situated above he hole 41 a of the outer profile 41, the inner profile 41 is substantially completely slid in the outer profile 41. The length of the arm part 4 is in this case substantially equal to the length of the outer profile 41. When the hole 40a closest near the end 40' of the inner profile 40 is situated above he hole 41 a of the outer profile 41, the inner profile 41 is slid out of the outer profile 41 as far as possible. The length of the arm part 4 in this case substantially equals the sum of the lengths of both profiles 40, 41.

Because of the presence of a spring mechanism (not shown) around the axis (not shown) extending throughout the holes 10b in the releasable lock 10 and further throughout the holes 8c in the carriage 8, the releasable lock 10 is moved to the rotated position around the axis E in which the protrusion (not shown) on the face 10c extends throughout the hole 8b in the top face of the carriage 8, the hole 41 a in the outer profile 41, and further throughout one of the holes 40a in the inner profile 40. Thus, in order to slide the inner profile 40 in or out of the outer profile 41, the releasable lock 10 has to be unlocked by pulling the handle 10a of the releasable lock 10 in the direction shown by the arrow in Figure 12. As a result, the releasable lock 10 is rotated around the axis E until the protrusion does not extend anymore throughout the hole 8b in the top face of the carriage 8 and further throughout the hole 41 a in the outer profile and one of the holes 40a in the inner profile 40.

Any other suitable mechanism known by the person skilled in the art for obtaining a telescopic arm part 4 may however also be used for the parasol arm of the present invention.

Between a part of the contacting surfaces of the inner 41 and outer 40 profile, sliding strips may be present to facilitate the sliding of the inner profile 41 in and out the first profile 41. These strips are present in the respective recesses 44, 44' in the inner 40 and outer 41 profile (figures 14a and 15a), and extend over a small part of the length of the profiles 40, 41. The strips of the outer profile 41 are fixed to the outer profile 41 at the second end 41" thereof by means of screws or bolts or any other connecting means received in the holes 41 c (figure 14b) present in the outer profile 41. The strips of the inner profile 41 are fixed to the inner profile 40 at an end 40' thereof by means of screws or bolts or any other connecting means received in the holes 40c (figure 15b) present in the inner profile 40. Besides facilitating the sliding of the profiles 40, 41 with respect to each other, these strips so prevent that the inner profile 40 falls out the outer profile 41 when sliding the inner profile 40 out the outer profile 41. Indeed, as the inner profile is slid out the outer profile after having unlocked the releasable lock 10, the strips situated at the end 40' of the inner profile will abut against the strips situated at the second end 41" of the outer profile and the inner profile 40 cannot be slid further out of the outer profile 41.

When the arm part 4 is not telescopic, only the outer profile 41 is present and the head 5 may in this case connected to the end 41" of this profile 41.

As shown in Figure 10, the first end 41' of the outer profile 41 of the arm part 4 co-operates with the first shoulder part 31. The shoulder part 31 is received within the space 42 enclosed within the outer profile 41 over a distance d2 and is thus entirely surrounded by the outer profile 41.

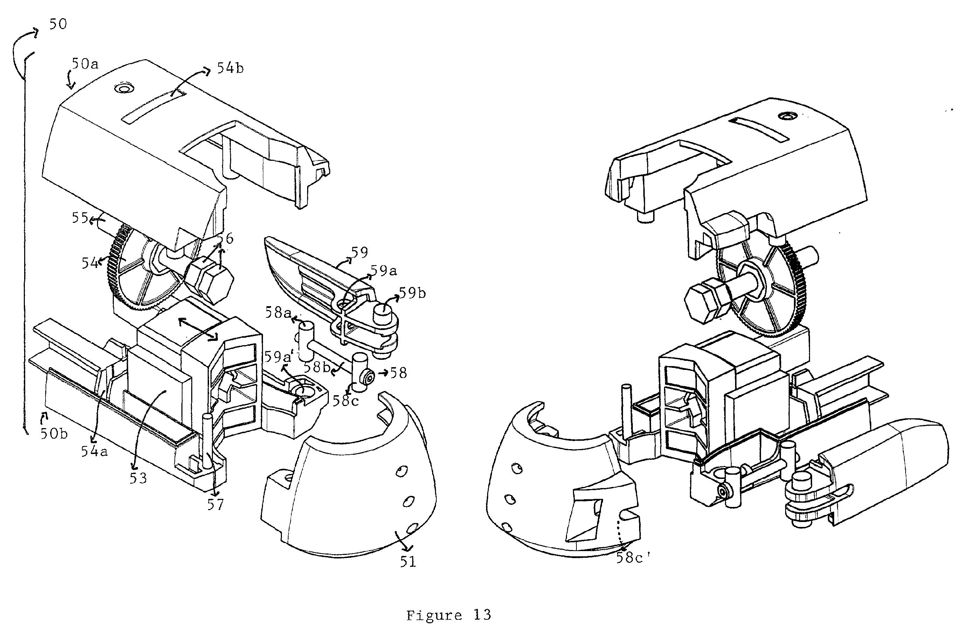

The head 5 comprises a back part 50 and a front part 51, enclosing between them a central hole 52, as can be seen from Figure 7. In Figure 13, an exploded view of the head 5 is shown. The back part 50 comprises an upper part 50a and a lower part 50b connected to each other. In the space enclosed between the upper 50a and lower 50b part, a head part 53 is slidably connected. The head part 53 is connected to a wheel 54 by means of a screw 55. The screw 55 extends throughout a hole (not visible) in the head part 53 and a corresponding hole in the wheel 54. The wheel 54 is received in a groove 54a in the lower part 50b and in the slit 54b in the upper part 50a. The screw 55 is fixed to the head part 53 by two bolts 56 at both sides of the hole in the head part 53. By turning the wheel 54, the screw 55 turns and extends more or less towards the front part 51 of the head 5. As a result, the bolts 56 also move more or less towards the front part 51 of the head. Since the head part 53 is caught between the bolts 56, the head part 53 will move together with the screw 55 and bolts 56. So, the head part 53 can be slid towards or away from the front part 51 as shown by the double arrow. As can be seen from Figure 7, this allows varying the dimensions of the central hole 52 of the head 5. As such, the dimensions of the central hole 52 may be adapted to the thickness of the parasol to be held in the head 5.

The front part 51 is at a first end hingedly connected to the back part 50. Thereto, the front part 51 is rotatable around the vertical axle 57 positioned on the lower part 50b of the back part 50.

The front 51 and back part 50 are further connected to each other by means of a handle 59 acting on a 'clamp' 58. The handle 59 is hingedly connected to the back part 50. Thereto, the handle 59 is rotatable about the axle 59b received in the corresponding hole 59b' in the lower part 50b. The clamp 58 comprises two vertical axles 58a, 58c connected to each other by a horizontal axle 58b. The axle 58a is received in the corresponding hole 59a in the handle 59, whereas the axle 58c is received in a corresponding recess 58c' in the front part 51. The action of the handle 59 on the 'clamp' 58 allows the two parts 50, 51 to be clamped together. A such, the parasol is also clamped in the central hole 52 of the head 5.

The arm part 4 further comprises first locking means 6.

These first locking means 6, shown in Figure 11, comprise a support part 60. The support part 60 is at a first end rotatably connected to the fixing part 2. Thereto, as shown in Figure 6, the support part 60 is connected to the connecting means 28 (see above) by a screw or bolt or any other fixing means received throughout the holes 18' in the connecting means 28 and further throughout corresponding holes 60' (Figure 11) in the support part 60. The connecting means 28 allow the rotation of the support part 60 with respect to the fixing part 2 about a substantially horizontal axis (shown by line C in Figure 6) parallel to the first axis A about which the arm part 4 is rotatable with respect to the fixing part 2.

At its second end, opposite the first end, the support part 60 is rotatably connected to a carriage 61. As shown in Figure 11, the support part 60 is rotatably connected to the carriage 61 by means of a screw or bolt or any other fixing means received throughout the holes 61 d in the carriage 61 (Figure 12) and further throughout corresponding holes (not visible in Figure 11) in the support part. As a result, the support part 60 can rotate with respect to the carriage 61 about an axis D extending throughout the holes 61 d (Figure 12) of the carriage 61 parallel to axis C.

The carriage 61 is slidably connected to the arm part 4. Thereto, the carriage 61 can slide within the space 43 enclosed by the outer profile 41 in longitudinal direction thereof.

In Figure 1, where the arm part 4 is in the supporting position, both the angle β between the support part 60 and the fixing part 2, as well as the angle γ between the support part 60 and the arm part 4, are smaller than 90°. The carriage 61, being connected to the second end of the support part 60, is in the supporting position situated at a distance D1 in longitudinal direction of the arm part 4 from the first end 41' of the outer profile 41 (shown in Figure 11). When rotating the arm part 4 towards the storage position, the support part 60 rotates with respect to the fixing part 2 about the axis C such that the angle β between the support part and the fixing part 2 increases. Correspondingly, the carriage 61, being connected to the second end of the support part 60, slides in a direction away from the second shoulder part 32. Also concomitant, the support part 60 rotates with respect to the carriage 61 about axis D such that the angle γ between the support part 60 and the arm part 4 decreases. In the storage position, shown in Figure 1, the angle β between the support bar 60 and the fixing part 2 is 180°, whereas the angle γ between the support part 60 and the arm part 4 is 0°C. In this position, the support part 60 extends parallel to the vertical support and the arm part 4 and is received within the space 43 enclosed by the outer profile 41 of the arm part 4. The carriage 61 is in this position situated at a distance D2 in longitudinal direction of the arm part 4 from the first end 41' of the outer profile 41. In other words, the length of the support part 60 and that of the arm part 4 need to be adjusted to each other in order to allow the movement from the arm part 4 from the supporting position towards the storage position or vice versa.

The first locking means 6 further comprise a releasable lock 62, shown in detail in Figure 12. The releasable lock 62 is hingedly connected to the carriage 61 by means of an axis (not shown) extending throughout the holes 62b in the releasable lock 62 and further throughout the holes 61 c in the carriage 61. As such, the releasable lock 62 is rotatable with respect to the carriage 61 about the axis shown by line E. On the top of the face 62c of the releasable lock 62, a protrusion (not shown) is present which protrudes throughout the hole 61 b in the top face of the carriage 61 and further throughout one of the holes 41 b present in the outer profile 41. Because of the presence of a spring mechanism (not shown) around the axis (not shown) extending throughout the holes 62b in the releasable lock 62 and further throughout the holes 61 c in the carriage 61, the releasable lock 62 is moved to the rotated position around the axis E whereby the protrusion extends throughout the hole 61 b in the top face of the carriage 61, and one of the holes 41 b in the outer profile 41.

When the protrusion of the releasable lock 62 protrudes throughout the hole 61 b in the top face of the carriage 61 and further throughout the hole 41 b in the outer profile 41 at a distance D1 from the end 41' of the outer profile 41, the carriage 61 is prevented from sliding in the space 43 enclosed by the outer profile 41 and is locked at this position D1. This position of the carriage 61 corresponds to the position in which the arm part 4 is in the supporting position (shown in Figure 3 and 11). As such, the arm part 4 can be locked in the supporting position by the releasable lock 10.

When instead of protruding throughout the hole 41 b in the outer profile 41 at a distance D1 from the end 41' of the outer profile 41, the protrusion of the releasable lock 62 protrudes throughout the hole 41 b in the outer profile 41 at a distance Dx from the end 41' of the outer profile 41, the carriage is locked at this position Dx. This position of the carriage 61 corresponds to the position in which the arm part 4 is in an intermediate position (Figure 4). As such, the arm part 4 can be locked in an intermediate position between the supporting position and the storage position. It will be clear from the above that the number of holes 41 b will determine the number of intermediate positions between the storage and supporting position in which the arm part 4 may be locked.

When the protrusion of the releasable lock 62 protrudes throughout the hole 61 b in the top face of the carriage 61 and further throughout the hole 41 b in the outer profile 41 at a distance D1 from the end 41' of the outer profile 41, the carriage 61 is prevented from sliding in the space 43 enclosed by the outer profile 41 and is locked at this position D1. This position of the carriage 61 corresponds to the position in which the arm part 4 is in the supporting position (Figure 1).

The locking of the arm part 4 in the supporting, storage or an intermediate position may however also be achieved in any other suitable way known by the man skilled in the art, for instance by means of a carriage having a clamping mechanism allowing it to be clamped at any position between D1 and D2.

The releasable lock 62 has to be unlocked by pulling the handle 62a of the lock in the direction shown by the arrow. As a result, the releasable lock 62 is rotated around the axis E until the protrusion does not extend anymore throughout the hole 61 b in the top face of the carriage 61 and one of the holes 41 b in the outer profile 41.

The parasol arm further comprises third locking means for further locking the arm part 4 in the supporting position, the storage position as well as in an intermediate position between the storage and the supporting position. These third locking means comprise a locker provided in the hole 62d of the releasable lock 62. Due to the presence of the locker in the hole 62d, the pulling of the handle 62a of the lock in the direction shown by the arrow for rotating the releasable lock 62 around the axis E until the protrusion does not extend anymore throughout the hole 41 b in the outer profile at a distance D1, D2, or Dx, is prevented. As a result, the releasable lock 62 may not be unlocked anymore, and thus the carriage 61 is locked at respectively the position D1, D2, and Dx, resulting in the further locking of the arm part 4 in resp. the supporting position, the storage position and an intermediate position between the storage and the supporting position.

The parasol arm 1 may further comprise a pull spring and/ or a gas spring. As shown in Figure 10, a pull spring 9 is at a first end connected to the shoulder 3, by means of a short axis 9' of which the opposite ends are received in corresponding recesses 9" in the shoulder 3. As shown in Figure 11, the pull spring 9 is at a second end opposite the first end connected to the carriage 61 by means of a short axis (not shown) of which the opposite ends are received in the holes 61f (figure 12) present in the carriage 61. The pull spring 9 may however also be connected to the carriage 61 and the shoulder 3 in any other suitable way. Alternatively, or additive to the pull spring 9, a gas spring may be present. Such a gas spring would be connected at a fist end to the carriage 61, end at a second end opposite the first end to the carriage 8.

Due to the presence of the pull spring 9, the movement of the arm part 4 from the storage position towards the supporting position is aided. Indeed, when the arm part 4 is rotated from the storage position towards the supporting position, the carriage 61 slides within the space 43 enclosed by the outer profile 41 from the position situated at a distance D2 from the end 41' of the outer profile 41 in longitudinal direction of the arm part 4 towards the position situated at a distance D1 from the second shoulder part 32 in longitudinal direction of the arm part 4. As the pull spring 9 exerts a pull force on the carriage 61 in the direction of the movement of the carriage 61 towards the shoulder 3, the sliding of the carriage 61 is facilitated. As a result, the concomitant movement of the support part 60 connected to the carriage 61, and thus the moving of the arm part 4 (see above) is aided. Similarly, if a gas spring would be present, the gas spring would exert a pushing force on the carriage 61 in the direction of the movement of the carriage 61 towards the shoulder 3, thereby aiding the sliding of the carriage 61.

The shoulder 3 further enables rotation of the arm part 4 with respect to the fixing part 2 about a second axis (shown by line B in Figure 6) which extends substantially parallel to the fixing part 2. In Figure 6, the second axis coincides with the vertical rotation axis B of the tube 23. In the embodiment shown, the tube 23 is rotatable about its vertical axis B. So, the shoulder 3, being fixed to the tube 23 by means of the ring 27 (see above), and thus the arm part 4 which is connected to the shoulder 3, rotates by means of the tube 23.

As the connecting means 28 to which the support part 60 are connected are fixed to the tube 23, the support part 60 rotates along with the arm part 4 as a whole about the second axis B.

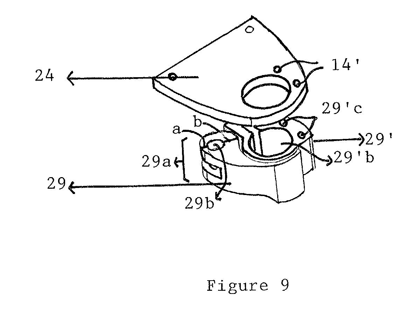

The rotation of the arm part 4 around the second axis B may be locked by second locking means 29, 29', as shown in Figures 8 and 9. These second locking means 29, 29' are connected to the bottom end of the tube 23 of the fixing part 2, at a position below the bottom plate 24. These second locking means comprise a handle 29 acting on a clamp 29'. In the clamp 29', a central hole 29'c is provided through which the tube 23 protrudes. The clamp 29 is connected to the bottom plate 24 over a part of the circumference of the clamp 29. In Figure 9, the clamp 29 is connected to the bottom plate 24 by means of a screw or a bolt or any other connecting means passed throughout holes 14" in plate 24 and received in holes 29'b in the clamp 29'. The clamp 29' may however also be connected to the plate 24 over a part of its circumference in any other way, for instance by co-extruding the clamp 29 with the plate 24. The handle 29 fits around a part of the circumference of the clamp 29'. Hereby, the part 29a of the handle 29 fits in the space 29'a enclosed by the clamp 29'. The handle 29 comprises a vertical axis 29b around which the handle 29 is rotatable, and a horizontal axis 29c (Figure 8) connected to the first axis 29b. This second axis 29c is received in corresponding holes in the clamp 29' (not shown). The axis 29b about which the handle 29 rotates is positioned in an eccentric way, such that the distance a is smaller than the distance b. When the handle 29 is rotated around the vertical axis 29b such that the part 29a at the side of the vertical axis 29b having the small distance a faces the space 29'a, the clamp 29' is not clamped by the handle 29 and thus the tube 23 is not clamped in the central hole 29'b. When the handle 29 is rotated around the vertical axis 29b such that the part 29a at the side of the vertical axis having the long distance b faces the space 29'a, the clamp 29' is clamped by the handle 29 and thus the tube 23 is clamped in the central hole 29'b of the clamp 29'. However, also any other locking means known to the man in the art may be used for locking the rotation of the arm part 4 around the second axis B.

Because the face 7 of the second profile 22 which faces the arm part 4 is substantially rounded, the arm part can be brought to the storage position parallel to the fixing part from a supporting position at any rotated position of the arm part about the second axis B without forcing the arm part 4. There is thus no need to first rotate the arm part about the second axis B to its central position before the arm part can be rotated about its first axis A to a storage position. Furthermore, the parasol arm cannot be forced when the arm part is brought to a storage position from a supporting position in which the arm part is not in its central position but rotated about the second axis

The first and second axis are both situated at the same distance to the arm part 4.

## Claims

1. A rotatable parasol arm (1) comprising a fixing part (2) for fixing the parasol arm (1) on a substantially vertical support and an arm part (4) having a head (5) for holding a parasol, the fixing part (2) extending substantially parallel to or in line with the vertical support, **characterized in that** the arm part (4) is connected to the fixing part (2) by means of a shoulder (3) which enables rotation of the arm part (4) with respect to the fixing part (2) about a first axis between a storage position in which the arm part (4) extends in its length direction substantially parallel to the fixing part (2) and a supporting position in which the arm part (4) extends in a direction away from the fixing part (2), the parasol arm (1) further comprising first locking means (6) for locking the arm part (4) in the supporting position.

2. A rotatable parasol arm (1) according to claim 1, **characterized in that** the shoulder (3) further enables rotation of the arm part (4) with respect to the fixing part (2) about a second axis which extends substantially parallel to the fixing part (2), and **in that** the parasol arm (1) further comprises second locking means (29, 29') for locking the rotation about the second axis.

3. A rotatable parasol arm according to claim 1 or 2, **characterized in that** the arm part (4) is connected to the shoulder (3) on a distance above the first axis and that the fixing part (2) has a substantially rounded shape on a side which is located adjacent the am part (4) in the storage position.

4. A rotatable parasol arm (1) according to any one of claims 1-3, **characterized in that** the first locking means (6) comprise a support part (60) having a first end rotatably connected to the fixing part (2), and a second end rotatably connected to a carriage (61), the carriage (61) being slidably connected to the arm part (4) and being provided with a releasable lock (62) for locking the arm part (4) in the supporting position.

5. A rotatable parasol arm (1) according to any one of claims 1-4, **characterized in that** the first locking means (6) are furthermore provided for locking the arm part (4) in an intermediate position between storage and supporting position as well as in the storage position.

6. A rotatable parasol arm according to any one of claims 1-5, **characterized in that** the parasol arm comprises third locking means for further locking the arm part (4) in the storage, the supporting position as well as in an intermediate position between storage and supporting position.

7. A rotatable parasol arm (1) according to any one of claims 1-5, **characterized in that** the arm part (4) comprises a first longitudinally extending profile (41) enclosing a longitudinally extending space (43) at a side of the arm part (4) which is adjacent the fixing part (2) in the storage position, the support part (60) being received at least partly in the space (43) when the arm part (4) is in the storage position.

8. A rotatable parasol arm (1) according to any one of claims 1-7, **characterized in that** the profile (41) comprises a face (45) facing the fixing part (2) when the arm part (4) is in in the storage position and delimiting the space (43) at an upper end thereof, the face (45) being provided in its middle with respect to the transverse direction of the profile (41) with a series of holes (41 d) at a distance from each other in longitudinal direction of the profile (41), **in that** the releasable lock (62) comprises a protrusion, **in that** the carriage (61) comprises a top face facing the face (45) of the profile (41) being provided with a hole (61 b) for receiving the protrusion of the releasable lock (62) and which may be in line with one of the holes (41 d) in the profile (41), the holes (41 b) in the face (45) of the profile (41) being provided for receiving the protrusion of the releasable lock (62) protruding throughout the hole (61 b) in the top face of the carriage (61) for locking the arm part (4) in the storage, the supporting or an intermediate position.

9. A rotatable parasol arm (1) according to any one of claims 1-8, **characterized in that** the parasol arm (1) comprises a pull spring and/or a gas spring (9) for aiding movement from the storage position towards the supporting position.

10. A rotatable parasol arm according to any one of claims 1-9, **characterized in that** the second locking means comprise a handle (29) acting on a clamp (29').

11. A rotatable parasol arm according to any one of claims 1-10, **characterized in that** the arm part is telescopic.
